# EUROPEAN PATENT APPLICATION

(11) **EP 0 850 586 A1**
(43) Date of publication of application: **01.07.1998**
(21) Application number: 97204096.8
(22) Date of filing: 24.12.1997
(51) Int. Cl.: A47J 31/40, A47J 31/00

(54) **An improved method of preparing a beverage by means of an instant beverage machine**

(30) Priority: 30.12.1996 IT MI962757
(71) Applicant: Premark International Holdings B.V., 3447 Woerden (NL)
(72) Inventor: Rinaldi, Roberto, 40013 Castelmaggiore, (Bologna) (IT)
(74) Representative: Perani, Aurelio

(57) **Abstract**

In a method of preparing a predetermined quantity of a beverage substantially equal to one drink from a water-soluble substance suitable for consumption with the use of an instant beverage machine having a collection container (11), some of the liquid necessary for dissolving the water-soluble substance suitable for consumption and for preparing the beverage is used to perform one or more washing operations on the inside of the collection container of the machine, reducing the duration of the operating cycle of the machine and avoiding the need to connect the machine to the water mains.

## Description

The present invention relates to a method of preparing a predetermined quantity of a beverage substantially equal to one drink from a water-soluble substance suitable for consumption with the use of an instant beverage machine.

More particularly, it relates to a method of preparing beverages such as coffee-, tea-, milk- peppermint-, and orange-flavoured drinks, etc., including cold beverages produced by the rehydration of solid, water-soluble substances suitable for consumption, such as dry extracts and/or flavouring powders or granules, cold beverage meaning a beverage having a temperature generally no greater than 10°C.

Purely to simplify the explanation of the present invention, only cold beverages will be referred to in non-limiting manner below.

Machines for preparing cold beverages of the type comprising a cooling tank which is associated with the evaporator of a refrigeration unit and in which a mixer is fitted are known. A quantity, generally several litres, of a beverage is poured into the tank in order to be cooled and mixed continuously.

These machines can cool drinks prepared either from syrups and liquid flavourings or from dry extracts and flavouring powders, but they have the disadvantage of being able to offer a selection of beverages ready for consumption with a limited number of different flavours, generally two flavours, since, for each type of beverage which can be selected, the machine has to have a separate cooling tank, consequently increasing its costs and size. Moreover, these machines do not produce instant beverages but require the beverage to be prepared in advance so that it can be cooled. Particularly in periods of limited demand, this involves a considerable wastage of unconsumed beverage since, to avoid changes in flavour, beverages should be consumed within a period of 24-48 hours from the time of preparation.

Machines for preparing so-called instant beverages are known; in these machines, upon each request, a quantity of beverage equal to one drink is prepared instantaneously by the dilution and mixing, in a collection container of the machine, of a measure of a liquid substance suitable for consumption such as, for example, a syrup or a liquid flavouring and a neutral liquid, generally water, supplied from a refrigerated tank of the machine.

To permit the preparation of beverages with different flavours, these machines have devices for supplying syrups and liquid flavourings, constituted by a plurality of controlled outlet ducts which put respective containers for syrups and liquid-flavourings into fluid communication with the collection container in which the beverage is prepared.

The aforementioned instant beverage machines satisfy the requirement to prepare beverages with different flavours whilst limiting the costs and size of an individual machine and eliminating the problem of the wastage of quantities of beverage prepared and not consumed. However, to prevent residues of a previously-prepared beverage from remaining in a beverage being prepared, it is necessary, after the preparation of each beverage, to perform a washing cycle inside the collection container of the machine in which the water-soluble substance suitable for consumption is diluted and mixed. Clearly, although this washing cycle is rapid, it involves a loss of time between the end of one beverage-preparation cycle and the start of the next.

Moreover, the need to perform the washing cycle requires the instant beverage machine to be connected to the water mains in order to draw off washing water, and to be connected to the drainage system in order to discharge the washing water, or at least requires the machine to have a container into which to discharge the water after washing. Naturally, this involves constraints in the selection of sites for the installation of these instant beverage machines in areas such as bars where refreshments are sold to the public and greatly limits their possible use as automatic beverage-vending machines in areas such as offices, waiting rooms and the like, in which connection to the water mains is impossible.

The problem upon which the present invention is based is that of devising a method of preparing a predetermined quantity of a beverage substantially equal to one drink from a water-soluble substance suitable for consumption, with the use of an instant beverage machine, which overcomes the disadvantages mentioned above with reference to the prior art described.

This problem is solved, according to the invention, by a method of preparing a predetermined quantity of a beverage substantially equal to one drink from a water-soluble substance suitable for consumption with the use of an instant beverage machine having a collection container, comprising the steps of:
- dissolving a measure of the substance suitable for consumption in a first quantity of a liquid less than the predetermined quantity of beverage to be prepared to produce a solution in the collection container of the machine, and
- discharging the solution into a container outside the machine,
characterized in that it comprises the steps of:
- admitting to the collection container of the machine a further quantity of liquid less than or equal to the quantity of a liquid necessary to dilute the solution to produce the predetermined quantity of beverage,
- washing the inside of the collection container of the machine with the further quantity of liquid, and
- discharging the further quantity of liquid into the outside container containing the solution.

This method advantageously enables one or more washing operations to be performed on the inside of the collection container of the machine with the use of some of the liquid required for the preparation of the beverage to be produced so as to reduce the duration of the operating cycle of the machine and to avoid the need to connect the instant beverage machine to a water mains.

The liquid is preferably water or a water-based liquid composition such as, for example, milk.

The first quantity of liquid preferably constitutes 40-60% by weight of the beverage to be prepared.

The water-soluble substance suitable for consumption preferably constitutes 4-12% by weight of the beverage to be prepared.

The water-soluble substance suitable for consumption is preferably a liquid such as, for example, a syrup, or a solid, water-soluble substance suitable for consumption selected from the group comprising dry extracts and/or flavouring powders or granules such as, for example, freeze-dried coffee, tea or milk powder.

The term "solution" as used herein means not only actual solutions but also emulsions, for example, based on milk, and fine suspensions, and the term "substance suitable for consumption" means both actual foods such as, for example, milk, sugar and cocoa, and other substances suitable for consumption but without nutritional value such as, for example coffee, tea or peppermint.

For an understanding of the invention and its advantageous aspects, a detailed description of a preferred embodiment of an instant beverage machine for producing cold beverages from a solid water-soluble substance suitable for consumption, and some examples of the implementation of the method of the invention, are given purely by way of non-limiting example below, with reference to the appended drawings.

In the drawings:

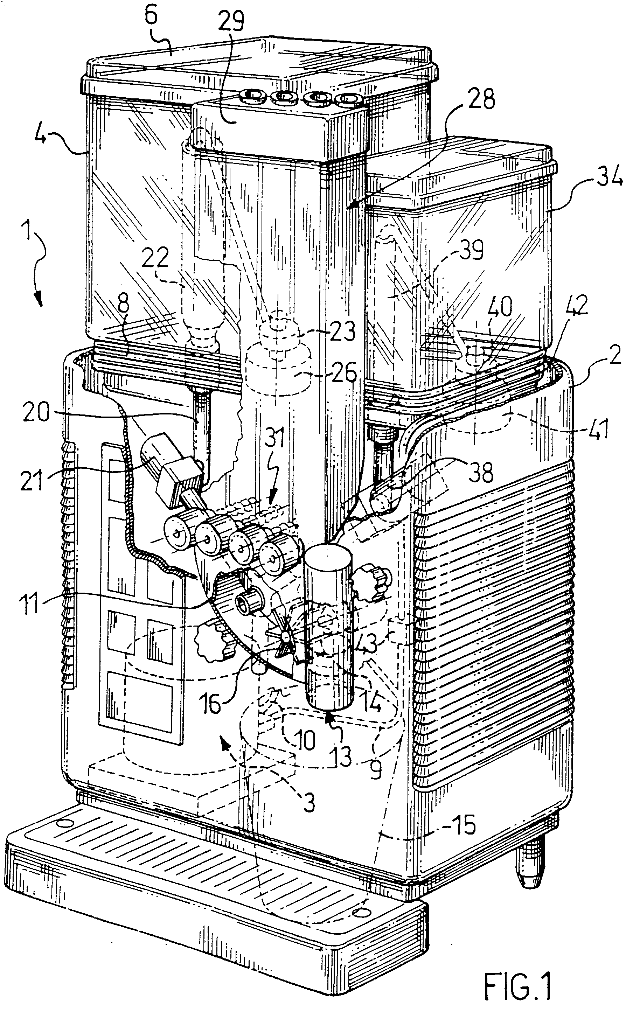

Figure 1 is a perspective view of an instant beverage machine according to the present invention for preparing cold beverages,

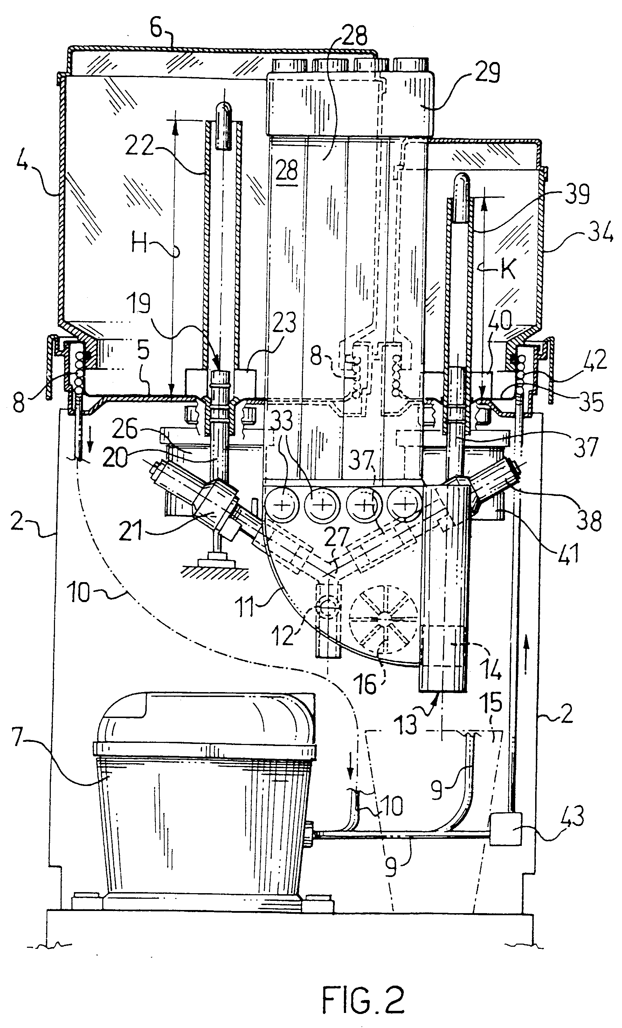

Figure 2 is partially-sectioned front elevational view of the machine of Figure 1, and

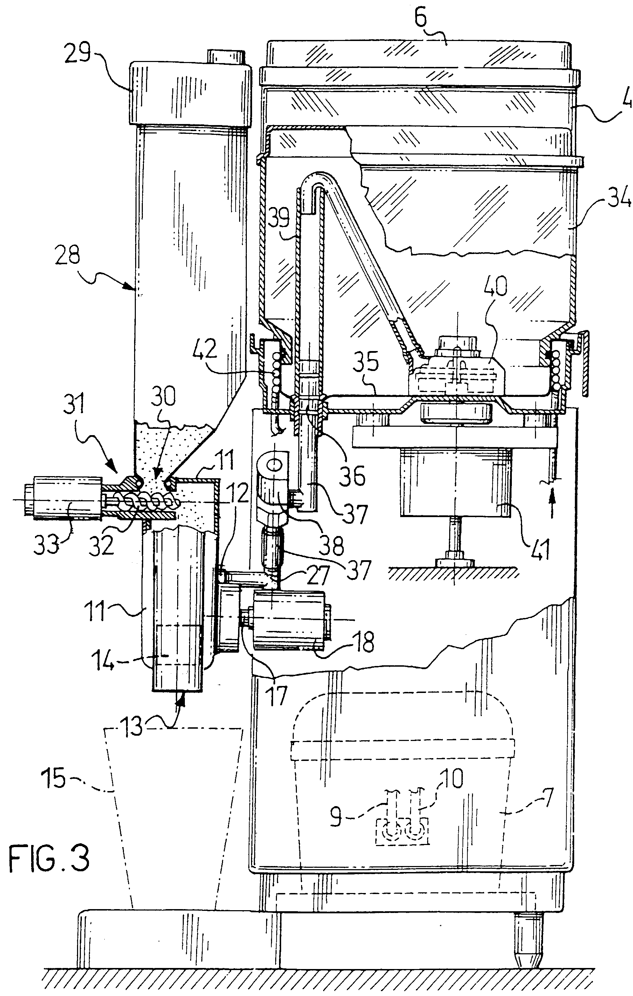

Figure 3 is a side view of the machine of Figure 1, shown in section.

With reference to the appended drawings, an instant beverage machine for preparing cold beverages is generally indicated 1.

The machine 1 comprises a rigid, substantially parallelepipedal body 2 having the function of a load-bearing structure inside which there is a refrigeration unit 3. A tank 4, comprising a base 5 and a lid 6, is supported on top of the body 2. The tank 4 is preferably made of glass or transparent plastics material to enable a user of the machine 1 to check its contents.

The refrigeration unit 3 comprises a motor-driven compressor 7, a condenser for the refrigerant fluid of known type not shown in the drawing for simplicity of representation, disposed on the rear of the body 2, and an evaporator 8 formed by a coil in which the refrigerant fluid expands taking away heat. The motor-driven compressor 7 is in fluid communication with the condenser and with the evaporator 8 by means of respective output and return pipes 9 and 10 for the refrigerant fluid.

The coil of the evaporator 8 is wound around the tank 4 in the vicinity of its base 5.

The machine 1 comprises a collection container 11 fixed to the body 2 externally on the front surface thereof. The collection container 11 is in a lower position than the tank 4. The collection container 11 is preferably constituted by a casing of transparent plastics material closed at the top by a lid and having an inlet opening 12 and an outlet opening 13. The outlet opening 13 is positioned in the lower portion of the collection container 11 so that its contents can be emptied out completely, as will become clearer from the following description. A normally-closed on/off solenoid valve 14 is associated with the outlet opening 13.

A bladed stirrer 16 for liquids is fitted inside the collection container 11 and is keyed to one end of a shaft 17 fitted for rotation in the collection container 11, the opposite end of the shaft 17 being fixed for rotation with an electric motor 18 housed inside the body 2.

In the base 5 of the tank 4 there is an outlet opening 19 which is put into fluid communication with the inlet opening 12 of the collection container 11 by means of a pipe 20 in which there is an on/off valve constituted, in the embodiment described, by a normally-closed solenoid valve, indicated 21.

A tubular element 22 open at its opposite ends, extends inside the tank 4 from the base 5 and perpendicular thereto, the upper end of the tubular element 22 being at a predetermined height H above the base 5 and its lower end being sealingly engaged in the outlet opening 19 so as to put the interior of the tubular element 22 into fluid communication with the outlet opening 19. The tank 4 also houses a centrifugal pump 23 positioned in the vicinity of the base 5 and driven by an electric motor 26 outside the tank 4. The centrifugal pump 23 is connected, by means of an output pipe, to the upper end of the tubular element 22 in order to fill the tubular element 22 with the liquid held in the tank 4 and to ensure that the liquid pressure at the outlet opening 19 is equivalent to the piezometric height H and is therefore independent of the level to which the tank 4 is filled.

Above the collection container 11, the body 2 of the machine 1 supports a plurality of bins, that is, in the embodiment shown, four bins, indicated 28, disposed side by side, for holding powders or granules.

Each bin 28 comprises an upper opening for the loading of the powders, closed by a lid 29, and a lower opening 30 for the discharge of the powders, with an associated device 31 of known type, communicating with the interior of the collection container 11, for extracting and metering the powders. The device 31 comprises an Archimedean screw 32 which is driven by an electric stepping motor 33 and extracts the powders from the bin 28 in order to transfer them into the collection container 11.

A second tank 34 for liquids, substantially identical to that described above but of smaller dimensions, is supported on top of the body 2.

The tank 34 comprises a base 35 in which there is an outlet opening 36 which is put into fluid communication with the inlet opening 12 of the collection container 11 by means of a pipe 37 in which an on/off valve constituted, in the embodiment described, by a normally-closed solenoid valve indicated 38, is fitted.

As described for the tank 4, the tank 34 comprises a tubular element 39 open at its opposite ends and extending inside the tank from the base 35 and perpendicular thereto, the upper end of the tubular element 39 being at a predetermined height K above the base 35 and the lower end being engaged sealingly in the outlet opening 36 so as to put the interior of the tubular element 39 into fluid communication with the outlet opening. The tank 34 houses a centrifugal pump 40 positioned in the vicinity of the base 35 and driven by an electric motor 41 outside the tank 34. The centrifugal pump 40 is connected, by means of an output pipe, to the upper end of the tubular element 39 in order to fill the tubular element 39 with the liquid held in the tank 34 and to ensure that the liquid pressure at the outlet opening 36 is equivalent to the piezometric height K and is therefore independent of the level to which the tank 34 is filled.

The machine 1 comprises heating means associated with the second tank 34. In the embodiment described, the heating means are constituted by a coil 42 which is wound around the tank 34 in the vicinity of its base 35 and in which some of the refrigerant fluid coming out of the motor-driven compressor 7 and directed towards the condenser can be made to flow. The flow of warm refrigerant fluid in the coil 42 is regulated by a solenoid valve 43, the opening of which is controlled by a thermostat associated with the second tank 34.

Alternatively, the heating means may be replaced by functionally equivalent means such as an electrical resistor in which the current is regulated by a thermostat associated with the second tank 34. Moreover, a second evaporator of the refrigerator unit 3 may be associated with the second tank 34, the second evaporator being connected in parallel with the evaporator 8 and the flow of the refrigerant cooling fluid coming out of the condenser through the second evaporator being regulated by a solenoid valve which is opened by a thermostat associated with the second tank 34 when the temperature reached by the liquid contained therein is higher than that required.

The pipes 20 and 37 are preferably connected to the inlet opening 12 of the collection container 11 by means of a multi-way connector 27.

The machine 1 further comprises elements such as valves, fluid pipes, electrical circuits, electronic components, switches etc., which are necessary for ensuring the correct operation of the machine 1 and which are not described below in order not to make the present description unnecessarily lengthy, since they are of known type.

The operation of the instant beverage machine 1 in order to produce a predetermined quantity of cold beverage equal to the contents of a glass is described below with reference to the appended drawings, starting from an initial operating condition in which the bins 28 contain dry extracts or flavouring powders or granules, the tank 34 contains a liquid, for example, water, heated to a temperature of at least 16°C by the warm refrigerant fluid which flows in the coil 42, and the first tank 4 contains water cooled by the evaporator 8 to a temperature below 4°C, preferably 1.5°C. It should be stressed that the contents of the first tank 4 may be constituted by water-based compositions such as, for example, milk or sugared water cooled to a temperature below 0°C, as well as by water.

The operating cycle of the machine is started by the operation of an electrical switch which, when closed, enables the stepping electric motor 33 associated with the bin 28 containing the dry extract or flavouring powder of the desired beverage flavour to be started. The starting of the electric motor 33 brings about rotation of the screw 32 connected thereto, which transfers from the bin 28 to the collection container 11 a measure of dry extract or flavouring powder corresponding to 4-12% of the final weight of the predetermined quantity of cold beverage to be prepared. The size of the measure is determined by the setting of the time for which the stepping electric motor 33 of the screw 32 is supplied and hence operated after each operation of the switch.

The bladed stirrer 16 is simultaneously set in rotation by the electric motor 18 and the solenoid valve 38 is opened for sufficient time to allow a first quantity of water equal to 10-25% of the final weight of the predetermined quantity of cold beverage to be prepared to flow into the collection container 11 from the tank 34. A concentrated liquid solution in which all of the dry extract or flavouring powder is dissolved is thus formed in the collection container 11. The rotation of the bladed stirrer 16 facilitates the dissolving of the dry extract or of the flavouring powder in the first quantity of water from the tank 34.

The solenoid valve 21 is then opened for sufficient time to allow a second quantity of cooled water coming from the first tank 4 to flow into the collection container 11 so that the collection container 11 contains a first quantity of liquid equal to 40-60% of the final weight of the predetermined quantity of cold beverage to be prepared. The admission of cold water from the tank 4 cools the solution contained in the collection container 11 by dilution. The rotation of the bladed stirrer 16 facilitates the mixing of the first quantity of water with the second quantity of water.

Without stopping the bladed stirrer 16, the solenoid valve 14 is then opened for sufficient time to allow all of the solution contained in the collection container 11 to be dispensed by gravity through the outlet opening 13 into a glass 15 disposed beneath it.

Upon completion of the dispensing, the solenoid valve 21 is opened for sufficient time to permit the flow into the collection container 11 of a quantity of water coming from the refrigerated tank 4 equal to the further quantity of liquid still to be added to the solution contained in the glass 15 in order to produce the quantity of cold beverage to be prepared. The rotation of the bladed stirrer 16 centrifuges the water inside the collection container 11 so as to cause the water to wash the inside of the container 11, eliminating therefrom the residues of the flavour of the solution just discharged into the glass 15.

To conclude the operating cycle of the machine 1, the solenoid valve 14 is opened for sufficient time to allow all of the water contained in the collection container 11 to be dispensed by gravity through the outlet opening 13 into the glass 15 disposed beneath it and the bladed stirrer 16 is stopped.

The admission of cold water to the glass 15 cools the liquid solution further by dilution, producing the predetermined quantity of cold beverage.

As an alternative to the method described above, the steps of admitting a further quantity of cold water to the collection container 11, washing it and dispensing the water into the glass 15 may be repeated two or more times so as to achieve better rinsing of the container. Naturally, in this case, the total quantity of water admitted to the collection container 11 in order to perform successive washing stages thereof will be substantially equal to the further quantity of liquid still to be added to the solution contained in the glass 15 in order to produce the quantity of cold beverage to be prepared.

Since the piezometric heights H and K of the liquid in the region of the respective outlet openings 19 and 36 are kept constant inside the tanks 4 and 34, the quantity of liquids admitted to the collection container 11 can be metered by regulation of the time for which the solenoid valves 21 and 38 are open.

### EXAMPLE I

With the use of the apparatus (1) described above and in accordance with the method of the present invention, a quantity of 14g of freeze-dried coffee extracted from a bin (28) by a screw (32) was admitted to the collection container (11), together with 50g of water at a temperature of 18°C, coming from the second tank (34), in order to be mixed and stirred by a bladed stirrer (16), producing a concentrated solution.

A quantity of 40g of water at a temperature of 3.5°C coming from the first tank (4) was then admitted to the collection container (11) so as to cool the concentrated solution by dilution to produce a solution having a temperature of 12°C, which was then discharged into a glass (15) disposed beneath the collection container (11).

A quantity of 120g of water at a temperature of 3.5°C coming from the first tank (4) was then admitted to the collection container (11) and was stirred therein for a few moments by the bladed stirrer (16) so as to wash the inside of the collection container (11) before being discharged into the glass (15), producing a cold coffee-flavoured beverage having a temperature of about 7.5°C.

### EXAMPLE II

With the use of the apparatus (1) described above and in accordance with the method of the present invention, a quantity of 18g of tea, extracted from a bin (28) by means of a screw (32) was admitted to the collection container (11), together with 50g of water at a temperature of 22°C coming from the second tank (34) in order to be mixed and stirred by a bladed stirrer (16) producing a concentrated solution.

A quantity of 60g of water containing 10% of sugar at a temperature of 0.3°C coming from the first tank (4) was then admitted to the collection container (11) so as to cool the concentrated solution by dilution to produce a solution at a temperature of 12°C which was then discharged into a glass (15) disposed beneath the collection container (11).

A quantity of 90g of water containing 10% of sugar at a temperature of 0.3°C coming from the first tank (4) was then admitted to the collection container (11) and was stirred therein for a few moments by means of the bladed stirrer (16) so as to wash the inside of the collection container (11) before being discharged into the glass (15) to produce a cold tea-flavoured beverage having a temperature of about 6.5°C.

### EXAMPLE III

With the use of the apparatus (1) described above and in accordance with the method of the present invention, a quantity of 11g of peppermint extract extracted from a bin (28) by means of a screw (32) was admitted to the collection container (11), together with 25g of water at a temperature of 18°C coming from the second tank (34) in order to be mixed and stirred by a bladed stirrer (16) to produce a concentrated solution.

A quantity of 75g of milk at a temperature of 1.5°C coming from the first tank (4) was then admitted to the collection container (11) and stirred so as to cool the concentrated solution by dilution to produce a solution at a temperature of 7°C which was then discharged into a glass (15) disposed beneath the collection container (11).

A quantity of 100g of milk at a temperature of 1°C coming from the first tank (4) was then admitted to the collection container (11) and was stirred for a few moments therein by means of the bladed stirrer (16) so as to wash the inside of the collection container (11) before being discharged into the glass (15), producing a cold peppermint- and milk-flavoured beverage having a temperature of about 5°C.

### EXAMPLE IV

With the use of an instant beverage machine having a collection container and in accordance with the method of the present invention, a quantity of 16g of barley-water syrup was admitted to the collection container together with 110g of water at a temperature of 3°C coming from a refrigerated tank of the machine, in order to be mixed and stirred by a bladed stirrer to produce a solution which was then discharged into a glass disposed beneath the collection container.

A quantity of 90g of water at a temperature of 3°C coming from the refrigerated tank was then admitted to the collection container and was stirred therein for a few moments by the bladed stirrer so as to wash the inside of the collection container before being discharged into the glass to produce a cold barley-water flavoured beverage having a temperature of about 4°C.

As can be appreciated from the description, the method according to the present invention enables a predetermined quantity of a beverage substantially equal to one drink to be prepared from a water-soluble substance suitable for consumption, with the use of an instant beverage machine, without any of the disadvantages mentioned with reference to the prior art. In fact the method enables one or more washing operations to be performed on the inside of the collection container of the machine with the use of some of the liquid required to prepare the beverage to be produced so as to reduce the duration of the operating cycle of the machine and to avoid the need to connect the instant beverage machine to a water mains.

The method of preparing a beverage according to the present invention can advantageously be implemented in instant beverage-preparation machines for use as automatic beverage-vending machines.

Naturally, in order to satisfy contingent and specific requirements, an expert in the art may apply variations to the method according to the present invention and to the above-described for implementing it without thereby departing from the scope of protection of the invention as defined by the following claims.

## Claims

1. A method of preparing a predetermined quantity of a beverage substantially equal to one drink from a water-soluble substance suitable for consumption with the use of an instant beverage machine (1) having a collection container (11), comprising the steps of:
- dissolving a measure of the substance suitable for consumption in a first quantity of a liquid less than the predetermined quantity of beverage to be prepared to produce a solution in the collection container (11) of the machine (1), and
- discharging the solution into a container (15) outside the machine (1),
characterized in that it comprises the steps of:
- admitting to the collection container (11) of the machine (1) a further quantity of a liquid less than or equal to the quantity of liquid necessary to dilute the solution to produce the predetermined quantity of beverage,
- washing the inside of the collection container (11) of the machine (1) with the further quantity of liquid, and
- discharging the further quantity of liquid into the outside container (15) containing the solution.

2. A method according to Claim 1, characterized in that the following steps are repeated at least once:
- admitting a further quantity of a liquid to the collection container (11) of the machine (1),
- washing the inside of the collection container (11) of the machine (1) with the further quantity of liquid, and
- discharging the further quantity of liquid into the outside container (15) containing the solution,
the sum of the further quantities of liquid admitted to the collection container (11) for washing being less than or equal to the quantity of liquid necessary to dilute the solution in order to produce the predetermined quantity of beverage.

3. A method according to Claim 1, characterized in that the liquid is water or a water-based liquid composition.

4. A method according to Claim 1, characterized in that the first quantity of liquid constitutes 40-60% by weight of the beverage to be prepared.

5. A method according to Claim 1, characterized in that the water-soluble substance suitable for consumption constitutes 4-12% by weight of the beverage to be prepared.

6. A method according to Claim 1, characterized in that the water-soluble substance suitable for consumption is a liquid.

7. A method according to Claim 1, characterized in that the water-soluble substance suitable for consumption is a solid, water-soluble substance suitable for consumption, comprising dry extracts and/or flavouring powders or granules.

8. A method according to Claim 7, for the preparation of a predetermined quantity of a cold beverage substantially equal to one drink, characterized in that a measure of the solid water-soluble substance suitable for consumption is dissolved in a first quantity of water or of a water-based liquid composition having a temperature higher than that of the cold beverage to be produced and is subsequently cooled by dilution with a second quantity of water or of a water-based liquid composition to produce the solution, the first quantity of liquid comprising the first and second quantities of water or of water-based liquid compositions.

9. A method according to Claim 8, characterized in that the temperature of the first quantity of water or of water-based liquid composition is at least 16°C.

10. A method according to Claim 8, in which the temperature of the second quantity of water or of water-based liquid composition and/or the temperature of the further quantity of liquid for washing the inside of the collection container (11) is below 4°C.

11. A method according to Claim 8, characterized in that the first quantity of water or of water-based liquid composition constitutes 10-25% by weight of the beverage to be prepared.
